# EUROPÄISCHE PATENTSCHRIFT

(11) **EP 2 321 952 B1**
(45) Veröffentlichungstag und Bekanntmachung des Hinweises auf die Patenterteilung: **03.01.2018**
(21) Anmeldenummer: 09778317.9
(22) Anmeldetag: 03.09.2009
(51) Int. Cl.: H04M 3/56, H04M 3/42, H04M 7/00

(54) **KONFERENZEINHEIT UND VERFAHREN ZUR DURCHFÜHRUNG EINER MEHRPUNKTKOMMUNIKATION**
CONFERENCING UNIT AND METHOD FOR CARRYING OUT MULTI-POINT COMMUNICATION
UNITÉ DE CONFÉRENCE ET PROCÉDÉ POUR L EXÉCUTION D UNE COMMUNICATION MULTIPOINT

(30) Priorität: 04.09.2008 DE 102008045929
(43) Veröffentlichungstag der Anmeldung: 18.05.2011
(73) Patentinhaber: Unify GmbH & Co. KG, 80807 München (DE)
(72) Erfinder: POTT, Philipp, 53113 Bonn (DE); AUGUSTIN, Stefan, 81379 München (DE)
(74) Vertreter: Fritzsche, Thomas
(86) Internationale Anmeldenummer: PCT/EP2009/006399
(87) Internationale Veröffentlichungsnummer: WO 2010/025923

(56) Entgegenhaltungen:
- EP-A1- 1 414 227
- WO-A1-92/17021
- US-A1- 2007 206 759
- US-A1- 2008 065 998
- DATABASE WPI Section PQ, Week 199803 Thomson Scientific, London, GB; Class P86, AN 1998-023725 XP002564898 "Voice summation system for e.g. video conference voting - has display unit which shows total amount of recognised voice data counted by operation unit" & JP 09 281991 A ((NIDE ) NIPPON DENKI SOFTWARE KK) 31. Oktober 1997 (1997-10-31)

## Beschreibung

Die Erfindung betrifft eine Konferenzeinheit für eine Mehrpunktkommunikation zur Durchführung von sprachbasierten Telefonkonferenzen. Die Erfindung betrifft im Speziellen eine Konferenzeinheit, mit Hilfe derer fragliche Entscheidungen der Konferenzteilnehmer abgefragt und gespeichert werden. Die Erfindung betrifft darüber hinaus ein Verfahren zur Durchführung einer Mehrpunktkommunikation.

Telefongespräche mit mindestens drei Teilnehmern sind als Telefonkonferenz bekannt und werden von bekannten Kommunikationssystemen als Leistungsmerkmal unterstützt.

Es sind weiterhin Konferenzeinheiten bzw. Konferenzserver bekannt, welche das von besagten Kommunikationssystemen angebotenen Leistungsmerkmalspektrum übersteigen. Derlei Konferenzserver bieten beispielsweise eine selbständige Einwahl und Authentifizierung der Konferenzteilnehmer, einen audiovisuellen oder multimediellen Austausch von Nutzdaten zwischen den Konferenzteilnehmern und vieles mehr. Heutige Konferenzserver folgen insbesondere dem allgemeinen Trend einer VoIP-Technik (Voice over Internet Protocol) zur Vermittlung und Zusammenführung von Nutzdaten einzelner Konferenzteilnehmer.

Aus EP 1 414 227 A1 ist eine Erkennung von Ereignissen bei der Kommunikation mit mehreren Sprachkanälen bekannt, bei der insbesondere bei einem Audiokonferenzsystem ein Alarm erzeugt wird, wenn ein vorbekanntes Ereignis, z. B. ein Sprachkommando oder ein "Dual Tone Multiple Frequency" (DTMF) Signal detektiert wird.

JP 09 281991 A (XP-002564898) offenbart eine Spracherkennungseinrichtung, z. B. für eine Video-Konferenzabstimmung, bei der eingehende Sprachdaten erkannt und die Anzahl der erkannten Sprachdaten ermittelt werden.

Weiterhin offenbart US 2007/0206759 A1 ein System, ein Verfahren sowie eine Vorrichtung zur Aufzeichnung von Konferenzanrufaktivitäten, bei der ein Konferenzanruf auf ein Sprachkommando hin überwacht und ein entsprechendes Signal in einem Speicher überwacht wird.

Des Weiteren offenbart US 2008/0065998 A1 ein Verfahren und eine Vorrichtung für ein Teleforum, bei der gleichzeitig Einladungsanrufe und Nachrichten an jeden Eingeladenen zur Teilnahme gesendet werden. Jeder Teilnehmer kann sich aktiv beim Teleforum beteiligen, z. B. an einer Abstimmung teilnehmen, wobei Snapshots des Bildschirms gespeichert werden können, die das Ergebnis der Abstimmung für spätere Überprüfung dokumentieren können.

Telefonkonferenzen werden oftmals mit dem Ziel durchgeführt, eine Entscheidung herbeizuführen. Je nach Organisation der Teilnehmer soll dabei eine Mehrheitsentscheidung oder eine Entscheidung von Entscheidungsträgern in Absprache mit anderen Konferenzteilnehmern herbeigeführt werden.

Ergebnisse dieser Entscheidung werden dann üblicherweise in einem Protokoll vermerkt oder in entsprechende elektronische Dokumente manuell eingetragen. Hilfsmittel für eine Entscheidungsfindung und -dokumentation durch eine Konferenzeinheit sind bislang nicht vorgesehen.

Aufgabe der Erfindung ist es, eine Konferenzeinheit anzugeben, die eine rechnergestützte Entscheidungsfindung unterstützt.

Die Aufgabe wird durch eine Konferenzeinheit mit den Merkmalen des Patentanspruchs 1 und durch ein Verfahren zur Durchführung einer Mehrpunktkommunikation zwischen einer Mehrzahl von Konferenzteilnehmern nach Anspruch 10 gelöst.

Die erfindungsgemäße Konferenzeinheit für eine Mehrpunktkommunikation zwischen einer Mehrzahl von Konferenzteilnehmern umfasst eine Mehrpunktsteuerungseinheit mit einer Mehrzahl von Nutzdatenschnittstellen. Jede Nutzdatenschnittstelle ist eingerichtet für einen bidirektionalen Nutzdatenaustausch mit einem jeweiligen Konferenzteilnehmer. Unter Nutzdaten bzw. »Payload« werden hierbei Audiodaten, insbesondere Sprachdaten, aber auch Multimediadaten wie audiovisuelle Daten oder auch zwischen Applikationen ausgetauschte digitale Daten verstanden. Die Mehrpunktsteuerungseinheit ist eingerichtet zur Zusammenführung der Nutzdaten in eine Konferenz, wobei im Falle von Audiodaten üblicherweise eine Mischung der Audiokanäle erfolgt. Bei audiovisuellen Daten besteht eine Zusammenführung üblicherweise in einer zweifachen Ansicht des eigenen Konferenzorts und des per Videokonferenz verbundenen Konferenzorts oder auch in einer alleinigen Darstellung des verbundenen Konferenzorts.

Erfindungsgemäß sind den Nutzdatenschnittstellen Mittel zur Umleitung des jeweiligen bidirektionalen Nutzdatenaustauschs mindestens eines auswählbaren Konferenzteilnehmers an eine Entscheidungsverarbeitungseinheit zugeordnet. Der Entscheidungsverarbeitungseinheit sind dabei Mittel zur Durchführung eines sprachlichen Dialogs mit dem auswählbaren Konferenzteilnehmer - beispielsweise in der Fachwelt auch als IVR bzw. »Interactive Voice Response« bekannte Mittel - und zur Entgegennahme sprachlicher Entscheidungen durch den auswählbaren Konferenzeilnehmer zugeordnet. Die Entscheidungsverarbeitungseinheit weist hierzu Mittel zur Konversion der sprachlichen Entscheidungen in ein maschinenlesbares Format - beispielsweise in der Fachwelt auch als ASR bzw. »Automatic Speech Recognition« bekannte Mittel - sowie Mittel zur konferenzteilnehmer-individuellen Speicherung der in das maschinenlesbare Format konvertierten Entscheidung.

Unter einem maschinenlesbaren Format wird dabei ein Format verstanden, das durch andere Applikationen bzw. Programme eines beliebigen Rechnersystems verarbeitet werden kann, also beispielsweise eine Speicherung in einer Datei oder in einer Datenbank, eine Weitergabe an eine Verarbeitungseinheit in Form einer Variablen oder als gesetztes Flag usw.

Ein besonderer Vorteil der Erfindung ist in der Eliminierung eines »Medienbruchs« in der Dokumentation der Entscheidungen zu sehen. Die Erfindung ermöglicht eine gemeinsame Datenhaltung der zu treffenden Entscheidungspunkte sowie der zu den Entscheidungspunkten von den einzelnen jeweiligen Konferenzteilnehmern getroffenen Entscheidungen.

Dadurch erübrigt sich in vorteilhafter Weise eine manuelle Eingabe von Entscheidungsergebnissen in ein Entscheidungsprotokoll oder in elektronische Dokumentationssysteme.

Weitere vorteilhafte Ausgestaltungen der Erfindung sind Gegenstand der Unteransprüche.

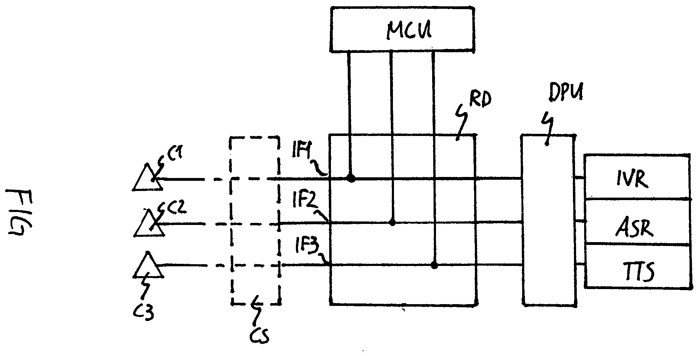

Ein Ausführungsbeispiel mit weiteren Vorteilen und Ausgestaltungen der Erfindung wird im Folgenden anhand der Zeichnung näher erläutert.

Dabei zeigt die einzige Figur ein Prinzipschaltbild zur Erklärung der Zusammenwirkung einzelner erfindungsgemäßer Komponenten.

Vor einer Beschreibung anhand der Zeichnung erfolgen zunächst einige Erläuterungen zur Motivation der Erfindung.

Die Ergebnisse von Telefonkonferenzen, insbesondere darin getroffene Entscheidungen, werden derzeit mithilfe von Protokollen festgehalten, die die Entscheidungspunkte sowie deren Abstimmungsergebnisse enthalten.

Während der Telefonkonferenz wird jeder einzelne Konferenzteilnehmer nach seiner Meinung oder seinem Votum mündlich befragt. Wenn einzelne Teilnehmer eine Änderung im Ablauf der Telefonkonferenz wünschen, müssen sie diese unterbrechen und ihr Anliegen äußern. Auch hier müssen andere Konferenzteilnehmer zustimmen oder widersprechen. Es obliegt üblicherweise dem Moderator der Telefonkonferenz, das Votum der Konferenz zu bestimmen.

Ansätze, eine Entscheidungsfindung mit rechnergestützten Methoden zu unterstützen, haben bislang keine Auswirkung auf den Ablauf einer mit herkömmlichen Mitteln betriebenen Telefonkonferenz. Eine rechnergestützte Entscheidungsfindung erfordert also bislang einen parallelen Betrieb von Applikationen zur Dokumentation der Ergebnisse einer herkömmlich betriebenen Telefonkonferenz.

Dies ist nachteilig nicht nur angesichts des zusätzlichen Aufwands, sondern auch aufgrund eines »Medienbruchs« in der Dokumentation der Entscheidung, d.h. durch Heranziehung eines Dokumentationssystems parallel zur vorwiegend mündlich betriebenen Telefonkonferenz. Durch diesen Medienbruch ist eine gemeinsame Datenhaltung der Telefonkonferenz einerseits sowie separaten Dokumentationssystemen andererseits nicht oder nur mit größerem Aufwand möglich. Dadurch können Arbeitsschritte, welche sich durch den Beschluss oder die Abstimmung in der Telefonkonferenz ergeben, nicht automatisiert angestoßen werden.

Vielmehr werden unter Verwendung von derzeitigen Mitteln nachfolgende Arbeitsschritte manuell, z.B. durch den Moderator oder Prozessverantwortlichen veranlasst, indem entsprechende Eingaben in Dokumentationssystemen veranlasst werden.

Es sind zwar Ansätze bekannt, nach denen parallel zur sprachbasierten Telefonkonferenz eine Konferenz für eine webbasierte Zusammenarbeit (»Web-Konferenz«) vorgesehen ist. In entsprechenden Applikationen für eine webbasierte Zusammenarbeit werden fallweise auch Abstimmungen der Teilnehmer unterstützt. Nachteilig an diesem Ansatz ist jedoch, dass Telefonkonferenzteilnehmer, die zum Zeitpunkt der Telefonkonferenz keinen Rechner zur Hand oder keinen Zugang zu einem Datennetz haben, nicht an der webbasierten Zusammenarbeit teilnehmen können. Zudem bleibt der genannte Medienbruch auch mit diesem Ansatz bestehen.

Ein wichtiger Grund, warum in der Fachwelt bislang keine Lösungsansätze zur Behebung dieses Medienbruchs angeboten wurden, dürfte vor allem in der Tatsache begründet sein, dass in herkömmlichen Telefonkonferenzsystemen üblicherweise alle Audiokanäle zu einem Gesamtkanal gemischt werden und eine ungestörte Interaktion einzelner Konferenzteilnehmer in Form von sprachlichen Kommandos, die an ein Rechnersystem übergegeben werden, nicht möglich ist.

Die Erfindung leistet dabei einen Beitrag zum derzeit existierenden Stand der Technik, indem ein neuartiges Konzept eingeführt wird, welches unter anderem eine Umleitung eines jeweiligen Teilnehmers sowie ein Sprachdialogsystem zur Erfassung von Entscheidungen des einzelnen Teilnehmers vorsieht.

Ein Ausführungsbeispiel der Erfindung wird nun anhand der Zeichnung näher erläutert.

Die Figur zeigt eine Konferenzeinheit für eine Mehrpunktkommunikation zwischen einer Mehrzahl von Konferenzteilnehmern C1,C2,C3. Die Konferenzteilnehmer C1,C2,C3 sind in der Zeichnung durch symbolische Telefonapparate versinnbildlicht. Diese symbolische Darstellung schließt selbstverständlich nicht den Einsatz beliebiger Rechner, PCs, PDAs (Personal Digital Assistant), VoIP Phones (Voice over Internet Protocol) usw. aus, sofern die besagten Einheiten Konferenzteilnehmer C1,C2,C3 in der Lage sind, bidirektional Nutzdaten auszutauschen, welche zumindest teilweise sprachliche Informationen beinhalten.

Zum Betrieb der Telefonkonferenz erfolgt ein Austausch von Nutzdaten mit einer Mehrpunktsteuerungseinheit MCU, über die die Konferenzteilnehmer C1,C2,C3 verbunden sind. Zur Verbindung der Konferenzteilnehmer C1,C2,C3 ist der Mehrpunktsteuerungseinheit MCU hierzu eine Mehrzahl von Nutzdatenschnittstellen IF1,IF2,IF3 zugeordnet, die in der Ausführungsform gemäß der Zeichnung in einem Umleitungsmittel RD angeordnet bzw. zusammengefasst sind.

Alternativ sind die Nutzdatenschnittstellen IF1,IF2,IF3 Teil der Mehrpunktsteuerungseinheit MCU, wobei eine im Folgenden zu besprechende Umleitung in dieser alternativen Ausführungsform von der Mehrpunktsteuerungseinheit MCU direkt veranlasst wird.

Zwischen den Konferenzteilnehmern C1,C2,C3 und den Nutzdatenschnittstellen IF1,IF2,IF3 sind üblicherweise eine Mehrzahl von Mitteln CS angeordnet, die, symbolisiert durch eine strichlierte Darstellungsweise, für die Darstellung der erfindungsgemäßen Mitteln an sich ohne Belang sind. Es handelt sich dabei beispielsweise um ein Kommunikationssystem CS bzw. Vermittlungsanlage zur Vermittlung und Steuerung der Endgeräte C1,C2,C3 oder, im Fall einer paketorientierte Kommunikation, um eine Mehrzahl aus Netzknoteneinheiten wie z.B. Routers, Switches usw. und/oder Server.

Jede Nutzdatenschnittstelle IF1,IF2,IF3 ist eingerichtet für einen bidirektionalen Nutzdatenaustausch mit einem jeweiligen Konferenzteilnehmer C1,C2,C3. In der Mehrpunktsteuerungseinheit MCU werden die Nutzdaten in eine Konferenz zusammengeführt, also beispielsweise jeweilige bidirektionale Audio-Kanäle in einen Gesamtkanal gemischt.

Eine Entscheidungsverarbeitungseinheit DPU ist über das Umleitungsmittel RD schaltbar mit den Nutzdatenschnittstellen IF1,IF2,IF3 verbunden.

Die Entscheidungsverarbeitungseinheit DPU enthält eine Dialogeinheit IVR zur Durchführung eines sprachlichen Dialogs. Diese Dialogeinheit IVR beinhaltet in fachüblicher Weise Entgegennahmemittel ASR zur Entgegennahme sprachlicher Entscheidungen durch den auswählbaren Konferenzeilnehmer sowie Umsetzungsmittel TTS zur Synthetisierung von Sprache.

Über eine Umleitung wird ein umzuleitender Nutzdatenkanal eines Konferenzteilnehmers C1,C2,C3 mit der Entscheidungsverarbeitungseinheit DPU verbunden. Alternativ können auch mehrere solcher Umleitungen eingerichtet werden, allerdings mit der Maßgabe, dass der Nutzdatenkanal eines ersten Konferenzteilnehmers C1, für den eine Umleitung an die Entscheidungsverarbeitungseinheit DPU eingerichtet wird, nicht gemischt wird mit dem Nutzdatenkanal eines zweiten Konferenzteilnehmers C2, für den ebenfalls eine Umleitung eingerichtet wurde. Mit anderen Worten wird also seitens der Entscheidungsverarbeitungseinheit DPU sowohl dem ersten Konferenzteilnehmer C1 als auch dem zweiten Konferenzteilnehmers C2 ein jeweils unabhängiger sprachlicher Dialog präsentiert.

Die Entscheidungsverarbeitungseinheit DPU der Telefonkonferenzeinheit bzw. des Telefonkonferenz-Servers bedient sich einer Dialogeinheit IVR (»Interactive Voice Response«), welche in fachüblicher Weise eine Frage stellt und die hierauf gesprochene Antwort vermerkt. Beispielsweise wird dem Konferenzteilnehmern C1,C2,C3 durch die Dialogeinheit IVR ein fraglicher Entscheidungspunkt in synthetisierter Sprache genannt, wobei durch die Dialogeinheit optional auch mögliche Entscheidungs- bzw. Antwortmöglichkeiten genannt werden. Die Antwort des Konferenzteilnehmers C1,C2,C3 wird von der Entscheidungsverarbeitungseinheit DPU vermerkt und in maschinenlesbarer Form gespeichert.

Die Synthetisierung von sprachlich vorgetragenen Entscheidungspunkten oder anderer sprachlichen Daten eines Konferenzteilnehmers C1,C2,C3 erfolgt dabei unter Verwendung der Umsetzungsmittel TTS zur Konversion gespeicherter maschinenlesbarer Daten in ein Sprachformat. Diese Umsetzungsmittel sind in der Fachwelt auch als »TTS« bzw. »Text-To-Speech« bekannt.

Die Analyse der Antwort bzw. des sprachlichen Kommandos eines Konferenzteilnehmers C1,C2,C3 und deren Umsetzung in maschinenlesbare Kommandos erfolgt unter Verwendung der Entgegennahmemittel ASR zur Konversion der sprachlichen Kommandos in ein maschinenlesbares Format. Diese Entgegennahmemittel sind in der Fachwelt auch als »ASR« bzw. »Automatic Speech Recognition« bekannt.

Anstatt die Dialogeinheit IVR über sprachliche Kommandos zu steuern, können in der Entscheidungsverarbeitungseinheit DPU alternativ oder zusätzlich - nicht dargestellte - Mittel zur Auswahl einer Option über die Telefontastatur vorgesehen sein, welche eine Erkennung eines von der gedrückten Telefontaste abhängigen DTMF-Signals (Dual Tone Multiple Frequency) bzw. Telefonsignals beinhalten.

Die Dialogeinheit IVR bzw. die Entscheidungsverarbeitungseinheit enthält die erläuterten Umsetzungsmittel ASR zur Konversion der sprachlichen Entscheidungen in ein maschinenlesbares Format sowie - nicht dargestellte - Mittel zur konferenzteilnehmer-individuellen Speicherung der in das maschinenlesbare Format konvertierten Entscheidung.

Das Umleitungsmittel RD bietet die Möglichkeit, eine Abtrennung eines einzelnen bidirektionalen Nutzdatenaustauschs eines auswählbaren Konferenzteilnehmers C1,C2,C3 von einer Zuführung zur Mehrpunktsteuerungseinheit MCU auszunehmen und den bidirektionalen Nutzdatenaustausch stattdessen an eine Entscheidungsverarbeitungseinheit DPU zu führen, bzw. »umzuleiten«. Die Beschränkung auf einen einzelnen Konferenzteilnehmer C1 ist dabei von rein organisatorischer Natur, um die Diskretion des entscheidenden Konferenzteilnehmers C1 zu waren. Tatsächlich steht einer Mehrzahl solcher Umleitungen nichts im Wege, solange für jeden einzelnen umgeleiteten Konferenzteilnehmer ein eigenes Dialogsystem in der Entscheidungsverarbeitungseinheit DPU zum Ablauf gebracht wird, oder, alternativ, eine Mehrzahl von der Entscheidungsverarbeitungseinheiten DPU vorgehalten werden.

Die Umleitung wird beispielsweise durch ein sprachliches Schlüsselwort oder durch eine vorbehaltene Kombination mehrerer Wörter während einer bestehenden Konferenz eingeleitet. Alternativ hierzu ist eine Einleitung der Umleitung durch einen beliebigen Konferenzteilnehmer, vorzugsweise dem Moderator durchführbar. Weiterhin kann eine Einleitung per Web-Service vorgesehen sein. Der bidirektionale Nutzdatenkanal bzw. Audiokanal jedes einzelnen Teilnehmers C1, C2, C3 kann somit aus dem gemischten Audiokanal der Konferenz ausgeblendet werden und einer getrennten Sprachschnittstelle zur Entscheidungsverarbeitung durch Umleitung zugeordnet werden. Diese Umleitung erfolgt insofern bidirektional, als sowohl der zum Teilnehmer hinführende Kanal - also das Hören des Konferenzteilnehmers - als auch der vom Teilnehmer wegführende Kanal - also das Sprechen des Konferenzteilnehmers - umgeleitet wird.

Gemäß einer alternativen Ausgestaltung der Erfindung ist vorgesehen, dass nur »Entscheidungsträger« eine Möglichkeit zur Abstimmung eröffnet bekommen, andere Teilnehmer werden optional z.B. mit »Zwischenmusik« bespielt. Eine Vergabe der Rollen einzelner Teilnehmer C1,C2,C3 erfolgt beispielsweise in der Entscheidungsverarbeitungseinheit DPU.

Gemäß einer weiteren alternativen Ausgestaltung der Erfindung ist vorgesehen, dass jeder Konferenzteilnehmer über eine persönliche PIN (Personal Identification Number) identifiziert wird. Die persönliche PIN kann entweder bei Anmeldung an die Telefonkonferenz oder bei jeder Antwort des Teilnehmers abgefragt werden. Die PIN kann den Teilnehmern vorab über eine verschlüsselte Email zugeschickt, vorab auf einen Anrufbeantworter gesprochen oder per SMS übermittelt werden. Optional wird eine individuelle PIN mit einer zeitlich unbegrenzten Gültigkeit verwendet.

Gemäß einer weiteren alternativen Ausgestaltung der Erfindung ist vorgesehen, dass vor und/oder während der Telefonkonferenz Entscheidungspunkte via Sprachsteuerung oder Webservice programmiert werden können.

In einer alternativen Ausgestaltung umfasst die Mehrpunktsteuerungseinheit MCU, welche als Telefonkonferenzserver ausgebildet ist - nicht dargestellte - Schnittstellen für die Anbindung eines - nicht dargestellten - Webkonferenzservers. Über diesen Webkonferenzserver kann im Übrigen mit Hilfe eines Webservices vorgesehen sein, dass die hier vorgestellten Entscheidungsabfragen alternativ auch per Eingabe in ein elektronisches Formular, beispielsweise einer HTML-Seite (Hypertext Markup Language) beantwortet werden können.

Gemäß einer weiteren alternativen Ausgestaltung der Erfindung ist vorgesehen, dass während der Telefonkonferenz ein Status der Entscheidungen bzw. Entscheidungspunkte der Konferenzteilnehmer über ein Dialogeingabeverfahren gemäß der erfindungsgemäßen Entscheidungsverarbeitungseinheit oder über einen Webservice abgefragt werden kann. Optional können diese eine parallele web-basierte Konferenz-Applikation interaktiv beeinflussen.

Nach Abschluss der Telefonkonferenz oder noch während der Telefonkonferenz kann über eine - nicht dargestellte - Web-service-Schnittstelle automatisiert eine Logdatei bzw. ein Protokoll der Entscheidungspunkte, deren Abstimmungsergebnisse und eine detaillierte Auflistung der beteiligten Teilnehmer erstellt werden.

Nach Abschluss der Telefonkonferenz können Arbeitsschritte in weiterführenden - nicht dargestellten - Applikationen abhängig von dem Verlauf der Entscheidungen automatisiert angestoßen werden. Es können teilnehmerbezogene Informationen an weitere - nicht dargestellte - Applikationen übergeben werden, die einzelne einem Konferenzteilnehmer zugeordnete Arbeitsschritte ausführen. Ein Beispiel für eine solche automatisierte Abarbeitung wäre eine Auslösung eines Bestellverfahrens mit den Personendaten aus der Telefonkonferenz.

Erfindungsgemäß wird eine Dokumentation der Entscheidungs-Ergebnisse für nachfolgende Prozesse ermöglicht, welche ein sofortiges Anstoßen von Arbeitsschritten noch in der Telefonkonferenz gestattet. Das Anstoßen erfolgt dabei »Server-Triggered«, also ohne Notwendigkeit eines Eingriffs einer natürlichen Person.

Die Erfindung ermöglicht einen Einsatz von Authentifizierungsmittel für eine individuelle Zuordnung von Entscheidungen und damit eine Authentifizierung in der Entscheidungsverarbeitung. Hierbei sehen Ausgestaltungen der Erfindung eine gesicherte Authentifizierung durch verschlüsselten Versand von persönlichen PINs, Identifikation jedes einzelnen Teilnehmers über persönliche PINs auch bei Eingabe der Antwort vor. Optional wird eine Verbindung mit einer - nicht dargestellten - Authorisierungs-Datenbank eingerichtet.

Eine Ausgestaltung der Erfindung sieht eine Steuerung des Telefonkonferenzverlaufes selbst vor, also Rückmeldungen zur Konferenzgeschwindigkeit, zum Stimmungsbild oder Besprechungsthema, die Durchführung von kontinuierlichen Abstimmungen oder den Wechsel zum nächsten Besprechungspunkt. Entsprechende Laufzeitstatistiken können zum Beispiel dem Moderator und/oder dem Vortragenden zur Verfügung gestellt werden.

Die Erfindung ermöglicht eine Unterstützung eines interaktives Auslösen eines Bestellauftrages oder einer Anfrage um die Zusendung eines erweiterten Informations-Paket während einer Telefonkonferenz, in der ein Produkt vorgestellt und erklärt wird, ohne die Telefonkonferenz selbst unterbrechen zu müssen und inklusive einer Sicherung der Datenintegrität zur Vermeidung von Fehlern sowie erweitert um eine Möglichkeit zur Archivierung der besprochenen Punkte.

Eine Entscheidung der Konferenzteilnehmer ist nicht beschränkt auf eine Entscheidung bezüglich einer Zustimmung zu vorher definierten Tagesordnungspunkten oder offenen Fragen. Die Entscheidungsverarbeitungseinheit bietet auch die Möglichkeit, eine sogenannte »Self-Management«-Funktionalität anzubieten, bei der ein Konferenzteilnehmer ihm zugeordnete, personenbezogene Daten abrufen, d.h. anhören, oder in Form einer sprachlichen Anweisung ändern kann. Ein Beispiel für ein personenbezogenes Datum ist eine hinterlegte E-Mail-Adresse eines Konferenzteilnehmers, unter der dieser z.B. eine Zusammenfassung der in der Telefonkonferenz ergangenen Entscheidungen beziehen kann. Sowohl die Adresse selbst auch das Abonnement der Zusammenfassung ist dabei als personenbezogenes Datum hinterlegbar und durch den Konferenzteilnehmer während einer Telefonkonferenz änderbar. Ein weiteres Beispiel für ein personenbezogenes Datum betrifft eine IP-Adresse (Internet Protocol), unter der der Konferenzteilnehmer an einer parallelen Web-Konferenz registriert ist.

Die Erfindung unterstützt damit einen Wechsel eines Rechner-Arbeitsplatzes während einer Konferenz. Hierzu sei angenommen, dass ein Konferenzteilnehmer während der Konferenz den Raum wechseln müsse. Dieser Konferenzteilnehmer kann weiterhin, unbeschadet seines Ortswechsels, kontinuierlich per Mobiltelefon an der Telefonkonferenz teilnehmen. Sobald der Konferenzteilnehmer an seinem neuen Arbeitsplatz angekommen ist, gibt dieser seine neue IP-Adresse ein und wird automatisch wieder in die parallel stattfindende Web-Konferenz hinzugeschaltet.

## Patentansprüche

1. Konferenzeinheit für eine Mehrpunktkommunikation zwischen einer Mehrzahl von Konferenzteilnehmern (C1,...C3) zur Unterstützung einer rechnergestützten Entscheidungsfindung, umfassend:
a) eine Mehrpunktsteuerungseinheit (MCU) mit einer Mehrzahl von Nutzdatenschnittstellen (IF1,...IF3), wobei jede Nutzdatenschnittstelle (IF1,...IF3) eingerichtet ist für einen bidirektionalen Nutzdatenaustausch mit einem jeweiligen Konferenzteilnehmer (C1,...C3),
b) wobei die Mehrpunktsteuerungseinheit (MCU) eingerichtet ist zur Zusammenführung der Nutzdaten in eine Konferenz,
c) wobei Mittel zur Steuerung des Konferenzverlaufes vorgesehen sind,
d) wobei den Nutzdatenschnittstellen (IF1,...IF3) Mittel (RD) zur Umleitung des bidirektionalen Nutzdatenaustauschs mindestens eines auswählbaren Konferenzteilnehmers (C1,...C3) an eine Entscheidungsverarbeitungseinheit (DPU) in Folge eines gesprochenen Schlüsselwortes oder eines Telefonsignals zugeordnet sind,
e) wobei die Entscheidungsverarbeitungseinheit (DPU) Mittel (IVR) zur Durchführung eines sprachlichen Dialogs und Mittel (ASR) zur Entgegennahme sprachlicher Entscheidungen durch den auswählbaren Konferenzeilnehmer (C1,...C3) aufweist,
f) wobei für jeden einzelnen umgeleiteten Konferenzteilnehmer (C1, ... C3) ein eigenes Dialogsystem in der Entscheidungsverarbeitungseinheit (DPU) zum Ablauf gebracht wird,
g) wobei Mittel zur Definition von Entscheidungspunkten vorgesehen sind und wobei für die Mittel zur Definition von Entscheidungspunkten sowohl eine sprachliche Eingabe als auch eine Eingabe über einen Web-Service vorgesehen ist,
h) wobei die Entscheidungsverarbeitungseinheit (DPU) Mittel zur Konversion der sprachlichen Entscheidungen in ein maschinenlesbares Format (ASR) sowie Mittel zur konferenzteilnehmer-individuellen Speicherung der in das maschinenlesbare Format konvertierten Entscheidung aufweist und
i) wobei konferenzteilnehmer-individuelle Informationen an weiterführende Applikationen übergeben werden.

2. Konferenzeinheit nach einem der vorgenannten Ansprüche, **gekennzeichnet durch**
Authentifizierungsmittel zur Authentifizierung der sprachlichen Entscheidung des Konferenzteilnehmers.

3. Konferenzeinheit nach einem der vorgenannten Ansprüche, **gekennzeichnet durch**
Mittel zur Abfrage eines Status der Entscheidungen der Konferenzteilnehmer.

4. Konferenzeinheit nach einem der vorgenannten Ansprüche, **gekennzeichnet durch**
Mittel zur Erstellung eines Protokolls über Entscheidungspunkte, und/oder
Abstimmungsergebnisse, und/oder
einer Auflistung der beteiligten Teilnehmer.

5. Konferenzeinheit nach einem der vorgenannten Ansprüche, **dadurch gekennzeichnet, dass** die Konferenzeinheit zur Durchführung von sprachbasierten Telefonkonferenzen dient.

6. Konferenzeinheit nach einem der vorgenannten Ansprüche, **gekennzeichnet durch**
Mittel zum Abruf und zur Änderung personenbezogener Daten eines Konferenzteilnehmers.

7. Verfahren zur Durchführung einer Mehrpunktkommunikation zwischen einer Mehrzahl von Konferenzteilnehmern (C1,...C3) zur Unterstützung einer rechnergestützten Entscheidungsfindung, bei dem
a) über eine Mehrzahl von Nutzdatenschnittstellen (IF1,...IF3) ein bidirektionaler Nutzdatenaustausch mit einem jeweiligen Konferenzteilnehmer (C1,...C3) eingerichtet wird,
b) eine Mehrpunktsteuerungseinheit (MCU) eine Zusammenführung der über die Nutzdatenschnittstellen (IF1,...IF3) ausgetauschten Nutzdaten in einer Konferenz steuert,
c) Mittel zur Steuerung des Konferenzverlaufes vorgesehen sind,
d) ein bidirektionaler Nutzdatenaustausch mindestens eines auswählbaren Konferenzteilnehmers auf eine Entscheidungsverarbeitungseinheit (DPU) in Folge eines gesprochenen Schlüsselwortes oder eines Telefonsignals umgeleitet wird,
e) von der Entscheidungsverarbeitungseinheit (DPU) ein sprachlicher Dialog mit dem auswählbaren Konferenzeilnehmer durchgeführt wird, wobei sprachliche Entscheidungen durch den auswählbaren Konferenzeilnehmer entgegengenommen werden,
f) für jeden einzelnen umgeleiteten Konferenzteilnehmer (C1, ... C3) ein eigenes Dialogsystem in der Entscheidungsverarbeitungseinheit (DPU) zum Ablauf gebracht wird,
g) Mittel zur Definition von Entscheidungspunkten vorgesehen sind und dafür sowohl eine sprachliche Eingabe als auch eine Eingabe über einen Web-Service vorgesehen ist,
h) die sprachlichen Entscheidungen in ein maschinenlesbares Format (ASR) konvertiert werden und konferenzteilnehmer-individuell in einem maschinenlesbaren Format gespeichert werden und
i) konferenzteilnehmer-individuelle Informationen an weiterführende Applikationen übergeben werden.

8. Verfahren nach Anspruch 7,
**dadurch gekennzeichnet,**
**dass** für die Konferenzteilnehmer durch Authentifizierungsmittel eine Authentifizierung der sprachlichen Entscheidung erfolgt.

9. Verfahren nach einem der Ansprüche 7 und 8,
**dadurch gekennzeichnet, dass**
Mittel zur Abfrage eines Status der Entscheidungen der Konferenzteilnehmer, und/oder.
Mittel zur Erstellung eines Protokolls über Entscheidungspunkte, und/oder
Abstimmungsergebnisse, und/oder
einer Auflistung der beteiligten Teilnehmer vorgesehen sind.

10. Verfahren nach einem der Ansprüche 7 bis 9,
**dadurch gekennzeichnet, dass**
die Konferenzeinheit zur Durchführung von sprachbasierten Telefonkonferenzen dient.

11. Verfahren nach einem der Ansprüche 7 bis 9,
**dadurch gekennzeichnet, dass**
Mittel zum Abruf und zur Änderung personenbezogener Daten eines Konferenzteilnehmers vorgesehen sind.

12. Verfahren nach einem der Ansprüche 7 bis 11 bzw. Konferenzeinheit nach einem der Ansprüche 1 bis 6, **dadurch gekennzeichnet, dass** die Mittel (IVR) zur Durchführung eines sprachlichen Dialogs auch Umsetzungsmittel (TTS) zur Synthetisierung von Sprache beinhalten.

## Claims

1. A conferencing unit for multi-point communication between a plurality of conference participants (C1, ...C3) for the support of a computer-assisted decision making, comprising:
a) a multi-point control unit (MCU) with a plurality of user data interfaces (IF1, ...IF3), wherein each user data interface (IF1, ...IF3) is set up for a bidirectional user data exchange with a respective conference participant (C1, ...C3),
b) wherein the multi-point control unit (MCU) is set up for merging the user data in a conference,
c) wherein means for controlling the course of the conference are provided,
d) wherein means (RD) for the redirection of the bidirectional user data exchange of at least one selectable conference participant (C1, ...C3) to a decision processing unit (DPU) as a result of a spoken keyword or of a telephone signal are associated with the user data interfaces (IF1, ...IF3),
e) wherein the decision processing unit (DPU) comprises means (IVR) for carrying out a voice dialog and means (ASR) for the reception of voice decisions by the selectable conference participants (C1, ...C3),
f) wherein, for each individual redirected conference participant (C1, ... C3), a separate dialog system is run in the decision processing unit (DPU),
g) wherein means for the definition of decision points are provided, and wherein for the means for the definition of decision points both a voice input and also an input via a web service are provided,
h) wherein the decision processing unit (DPU) comprises means for the conversion of the voice decisions into a machine readable format (ASR) as well as means for conference participant-specific storage of the decision converted into the machine-readable format, and
i) wherein conference participant-specific information is transferred to further applications.

2. The conferencing unit according to any one of the preceding claims, **characterized by**
authentication means for the authentication of the voice decision of the conference participant.

3. The conferencing unit according to any one of the preceding claims, **characterized by**
means for querying a status of the decisions of the conference participants.

4. The conferencing unit according to any one of the preceding claims, **characterized by**
means for the generation of a protocol on decision points, and/or
voting results and/or
of a list of the participating participants.

5. The conferencing unit according to any one of the preceding claims, **characterized in that** the conferencing unit is used for carrying out voice-based telephone conferences.

6. The conferencing unit according to any one of the preceding claims, **characterized by**
means for retrieving and/or modifying personal data of a conference participant.

7. A method for carrying out multi-point communication between a plurality of conference participants (C1, ...C3) for the support of computer-assisted decision making, wherein:
a) via a plurality of user data interfaces (IF1, ...IF3), a bidirectional user data exchange with a respective conference participant (C1, ...C3) is set up,
b) a multi-point control unit (MCU) controls a merging of the user data exchanged via the user data interfaces (IF1, ...IF3) in a conference,
c) means for controlling the course of the conference are provided,
d) a bidirectional user data exchange of at least one selectable conference participant is redirected to a decision processing unit (DPU) as a result of spoken keyword or of a telephone signal,
e) a voice dialog with the selectable conference participant is carried out by the decision processing unit (DPU), wherein voice decisions are received by the selectable conference participants,
f) for each individual redirected conference participant (C1, ... C3), a separate dialog system is run in the decision processing unit (DPU),
g) means for the definition of decision points are provided and for this purpose both a voice input and also an input via a web service are provided,
h) the voice decisions are converted into a machine readable format (ASR) and are stored in a conference participant-specific manner in a machine readable format, and
i) conference participant-specific information is transferred to further applications.

8. The method according to Claim 7,
**characterized in that**,
for the conference participants, an authentication of the voice decision occurs by means of authentication means.

9. The method according to either of Claims 7 and 8,
**characterized in that**
means for querying a status of the decisions of the conference participants, and/or
means for the generation of a protocol on decision points, and/or
voting results and/or
of a list of the participating participants are provided.

10. The method according to any one of Claims 7 to 9,
**characterized in that**
the conferencing unit is used for carrying out voice-based telephone conferences.

11. The method according to any one of Claims 7 to 9,
**characterized in that**
means for retrieving and for changing personal data of a conference participant are provided.

12. The method according to any one of Claims 7 to 11 or the conferencing unit according to any one of Claims 1 to 6,
**characterized in that** the means (IVR) for carrying out a voice dialog also comprise converting means (TTS) for voice synthesizing.

## Revendications

1. Unité de conférence pour une communication multipoint entre une pluralité de participants à une conférence (C1,...C3) pour aider à une prise de décision assistée par ordinateur, comprenant :
a) une unité de commande multipoint (MCU) avec une pluralité d'interfaces de données utiles (IF1,...IF3), dans laquelle chaque interface de données utiles (IF1,...IF3) est conçue pour un échange de données utiles bidirectionnel avec un participant à une conférence (C1,...C3) respectif,
b) dans laquelle l'unité de commande multipoint (MCU) est conçue pour le regroupement des données utiles dans une conférence,
c) dans laquelle des moyens pour commander le déroulement de la conférence sont prévus,
d) dans laquelle on attribue aux interfaces de données utiles (IF1,...IF3) des moyens (RD) pour la redirection de l'échange de données utiles bidirectionnel d'au moins un participant à une conférence (C1,...C3) sélectionnable vers une unité de traitement de décision (DPU) suite à un mot-clé vocal ou à un signal téléphonique,
e) dans laquelle l'unité de traitement de décision (DPU) présente des moyens (IVR) pour la réalisation d'un dialogue vocal et des moyens (ASR) pour la réception de décisions vocales par le participant à une conférence (C1,...C3) sélectionnable,
f) dans laquelle, pour chaque participant individuel à une conférence (C1,...C3) redirigé, on fait s'exécuter un système de dialogue dédié dans l'unité de traitement de décision (DPU),
g) dans laquelle des moyens pour la définition de points de décision sont prévus et dans laquelle, pour les moyens pour la définition de points de décision, une saisie vocale tout comme une saisie via un service Web sont prévues,
h) dans laquelle l'unité de traitement de décision (DPU) présente des moyens pour la conversion des décisions vocales en un format lisible par machine (ASR) ainsi que des moyens pour la mise en mémoire individuelle par participant à une conférence de la décision convertie au format lisible par machine et
i) dans laquelle des informations individuelles par participant à une conférence sont transmises à des applications complémentaires.

2. Unité de conférence selon l'une des revendications précédentes, **caractérisée par**
des moyens d'authentification pour l'authentification de la décision vocale du participant à une conférence.

3. Unité de conférence selon l'une des revendications précédentes, **caractérisée par**
des moyens pour l'interrogation d'un statut des décisions des participants à une conférence.

4. Unité de conférence selon l'une des revendications précédentes, **caractérisée par**
des moyens pour rédiger un compte-rendu sur des points de décision, et/ou
des résultats de vote, et/ou
une liste des participants impliqués.

5. Unité de conférence selon l'une des revendications précédentes, **caractérisée en ce que** l'unité de conférence sert à la réalisation de téléconférences basées sur la voix.

6. Unité de conférence selon l'une des revendications précédentes, **caractérisée par**
des moyens pour récupérer et pour modifier des données à caractère personnel d'un participant à une conférence.

7. Procédé pour l'exécution d'une communication multipoint entre une pluralité de participants à une conférence (C1,...C3) pour aider à une prise de décision assistée par ordinateur, dans lequel
a) on établit, via une pluralité d'interfaces de données utiles (IF1,...IF3), un échange de données utiles bidirectionnel avec un participant à une conférence (C1,...C3) respectif,
b) une unité de commande multipoint (MCU) commande un regroupement des données utiles échangées via les interfaces de données utiles (IF1,...IF3) dans une conférence,
c) des moyens pour la commande du déroulement de la conférence sont prévus,
d) un échange de données utiles bidirectionnel d'au moins un participant à une conférence sélectionnable est redirigé vers une unité de traitement de décision (DPU) suite à un mot-clé vocal ou à un signal téléphonique,
e) un dialogue vocal avec le participant à une conférence sélectionnable est réalisé par l'unité de traitement de décision (DPU), dans lequel des décisions vocales sont réceptionnées par le participant à une conférence sélectionnable,
f) pour chaque participant individuel à une conférence (C1,...C3) redirigé, on exécute un système de dialogue dédié dans l'unité de traitement de décision (DPU),
g) des moyens sont prévus pour la définition de points de décision et à cet effet, une saisie vocale tout comme une saisie via un service Web sont prévues,
h) les décisions vocales sont converties en un format lisible par machine (ASR) et sont mises en mémoire individuellement par participant à une conférence dans un format lisible par machine et
i) des informations individuelles par participant à une conférence sont transmises à des applications complémentaires.

8. Procédé selon la revendication 7,
**caractérisé en ce que**,
pour les participants à une conférence, il y a une authentification de la décision vocale par des moyens d'authentification.

9. Procédé selon l'une des revendications 7 et 8, **caractérisé en ce que**
l'on prévoit des moyens pour l'interrogation d'un statut des décisions des participants à une conférence, et/ou des moyens pour rédiger un compte-rendu sur des points de décision, et/ou
des résultats de vote, et/ou
une liste des participants impliqués.

10. Procédé selon l'une des revendications 7 à 9,
**caractérisé en ce que**
l'unité de conférence sert à la réalisation de téléconférences basées sur la voix.

11. Procédé selon l'une des revendications 7 à 9,
**caractérisé en ce que**
l'on prévoit des moyens pour la récupération et la modification de données à caractère personnel d'un participant à une conférence.

12. Procédé selon l'une des revendications 7 à 11 ou unité de conférence selon l'une des revendications 1 à 6, caractérisé(e) en ce que les moyens (IVR) pour la réalisation d'un dialogue vocal comprennent également des moyens de conversion (TTS) pour la synthétisation vocale.
